# EUROPEAN PATENT APPLICATION

(11) **EP 4 484 862 A1**
(43) Date of publication of application: **01.01.2025**
(21) Application number: 24184110.5
(22) Date of filing: 24.06.2024
(51) Int. Cl.: F25C 1/25

(54) **REFRIGERATOR**

(30) Priority: 26.06.2023 KR 20230081871
(71) Applicant: LG Electronics Inc., Yeongdeungpo-gu Seoul 07336 (KR)
(72) Inventor: KIM, Seonggyeong, 08592 Seoul (KR); KANG, Sunghee, 08592 Seoul (KR); KIM, Yong Hyun, 08592 Seoul (KR); KANG, Sin Young, 08592 Seoul (KR)
(74) Representative: Ter Meer Steinmeister & Partner

(57) **Abstract**

Disclosed is a refrigerator, in which a controller electronically controls an air hole of a reducer valve to be open and closed, and thus a point in time to open and close the air hole for discharging air to a water supply channel portion is accurately controlled.

## Description

### BACKGROUND

### [Technical Field]

The disclosure relates to a refrigerator, and more particularly to a refrigerator including a water tank to supply water to an ice making device of the refrigerator.

### [Background Art]

The refrigerator refers to a home appliance in which cold air generated using the circulation of a refrigerant is supplied to a storage compartment to keep various types of storage objects fresh for a long period of time in the storage compartment.

The refrigerator may include an ice making device. E.g the ice making device is disposed inside the refrigerator and the ice making device makes ice by using the cold air generated by the refrigerator. The ice making device may make and store a certain amount of ice in advance.

To make ice, water should be supplied to the ice making device. For example, there may be two methods of supplying water to the ice making device.

For instance, there are a plumbing method of supplying water from an external water source such as a tap, and a non-plumbing method of supplying water from a water tank placed at or inside the refrigerator.

When the non-plumbing method is used to supply water to the ice making device, water may be pumped from the water tank by a pump that generates water pressure.

Water pumped by the pump is supplied to the ice making device through a water supplying pipe placed between the water tank and the ice making device, and the water supplying pipe may be adjusted to open or close a flow path with a valve.

In this case, a controller of the refrigerator, which controls the pump to operate and the valve to be opened or closed, may stop the supply of water by controlling the pump to stop operating and the valve to be closed when a preset water supply time is up.

The process of supplying water to the ice making device may be repeated by repeating the operation of the pump and the opening and closing of the valve as described above.

When water stored in the water tank is used up as the process of supplying water to the ice making device is repeated, air may be introduced along with the water into the water supplying pipe.

In this state, the supply of water is stopped, water is then refilled in the water tank, and the supply of water is resumed. In this case, the water and air, which has already been mixed in the water supplying pipe may increase a load applied on the pump significantly. Further the reliable supply of water might be interrupted due to the air in the supplying pipe.

As the load on the pump increases, problems that water is not supplied properly may arise.

To solve the problem with poor supply of water, it is known to discharge air in the water supplying pipe to the outside.

This is described in Korean Patent Publication No. 10-2009-0107569 disclosing a refrigerator with an air discharge unit that includes an air discharger to discharge air in a water supply path to the outside.

In more detail, an opening and closing member for selectively opening and closing the air discharger is provided and formed of a material or shape that can float on water, and selectively opens and closes the air discharger according to whether water passes through the water supply path.

When using such air discharger the air discharger is controlled to be opened and closed by mechanical vertical movement of water passing through the water supply path, and it is thus difficult to open the air discharger at an exact point in time to discharge air from the water supply path.

Second, when the amount of water passing through the water supply path is not constant, the air discharger may not be properly closed, and thus water may unintentionally leak through the air discharger.

Third, it is difficult to clearly distinguish between a point in time to stop the pump and a point in time to open the air discharger, and thus water may unintentionally leak through the air discharger when the air discharger is switched over between opening and closing.

Fourth, it is difficult to open the air discharger so that air can be introduced into the water supply path at a desired point in time, and thus there is a problem in that water is continuously introduced more than a preset amount of water.

Fifth, because the air discharge unit is merely a device that discharges air in the water supply path, when the water tank is positioned above the ice making device to which water is supplied, it is impossible to prevent the siphon phenomenon in which the supply of water continues even though the pump stops operating once water is supplied.

Furthermore Korean Patent Publication No. 10-2022-122176 discloses a refrigerator that includes a water pump and a return valve.

Here, because the return valve includes a second outlet that communicates with air, the inside of a pipe is always maintained to fluidly communicate with air.

Accordingly, when water is supplied along the pipe, water may unintentionally leak through the second outlet having a hole that communicates with air.

### [Disclosure]

### [Technical Problem]

An object is to provide a refrigerator which can exactly control a point in time to open and close an air hole through which air is discharged to a water supply channel portion.

Further, an object is to provide a refrigerator without leakage of water as much as possible.

Further, an object is to provide a refrigerator in which control is performed clearly distinguishing between a point in time to stop a pump operating and a point in time to open an air hole.

Further, an object is to provide a refrigerator which prevents a siphon phenomenon from occurring when water flows from a water tank to an ice making device.

Further, an object is to provide a refrigerator in which an air hole is properly controlled to be open so that air can be introduced into a water supply channel portion at a desired point in time.

Further, an object is to provide a refrigerator which can reduce a load on the operation of a pump while the pump operates.

Further, an object is to provide a refrigerator which increases a sanitation degree of water supplying pipes that make up a water supply channel portion.

The aspects of the disclosure are not limited to the above-mentioned aspects, and other aspects and advantages of the disclosure as not mentioned above may be understood from the following descriptions and more clearly understood from embodiments of the disclosure. Further, it will be readily appreciated that the aspects and advantages of the disclosure may be realized by features and combinations thereof as disclosed in the appended claims.

### [Technical Solution]

At least one of the objects is solved by the features of the independent claims. Preferred embodiments are given in the dependent claims.

According to an embodiment a refrigerator includes: a water tank,; a water supply channel portion; a pump; and a reducer valve.

In a very general aspect, a refrigerator is provided comprising an ice making device, a water tank configured to store water to be supplied to the ice making device; a water supply channel portion configured to supply water from the water tank to the ice making device; a pump in fluid communication with the water supply channel portion and configured to pump the water; and a reducer valve in fluid communication with the water supply channel portion to selectively introduce air into the water supply channel portion.

In one aspect, the refrigerator comprises a water tank configured to store water to be supplied to an ice making device; a water supply channel portion configured to make the water flow from the water tank to the ice making device; a pump configured to fluidly communicate with the water supply channel portion and pump the water; and a reducer valve configured to fluidly communicate with the water supply channel portion and comprising an air hole to selectively introduce air into the water supply channel portion.

Preferably, the air hole may be positioned above a highest water level of the water tank.

Preferably, the air hole is electronically controlled to be open and closed.

In one or more embodiments, the ice making device may be positioned below a lowest water level of the water tank.

In one or more embodiments, the water supply channel portion may be formed by one or more water supplying pipes.

In one or more embodiments, an end portion of the water supplying pipe facing toward the ice making device may be positioned below a lowest water level of the water tank.

In one or more embodiments, at least a portion of the ice making device may be located between a lowest water level and the highest water level of the water tank.

In one or more embodiments, the water supply channel portion may be formed by one or more water supplying pipes.

In one or more embodiments, an end portion of the water supplying pipe facing toward the ice making device may be positioned between a lowest water level and the highest water level of the water tank.

In one or more embodiments, the water supply channel portion may be formed by one or more water supplying pipes.

In one or more embodiments, an end portion of the water supplying pipe facing toward the water tank may be in contact with water stored in the water tank.

In one or more embodiments, an end portion of the water supplying pipe facing toward the ice making device may be not in contact with water supplied to the ice making device.

In one or more embodiments, the refrigerator may be partitioned into a refrigerator compartment and a freezer compartment. Preferably, the freezer compartment may be located below the refrigerator compartment.

In one or more embodiments, the water tank, the pump, and the reducer valve may be located in the refrigerator compartment.

In one or more embodiments, the ice making device may be located in the freezer compartment.

In one or more embodiments, the reducer valve may block the introduction of air as the air hole is closed upon making the supply of water using the water supply channel portion proceed.

In one or more embodiments, the reducer valve may introduce air as the air hole is open upon terminating the supply of water using the water supply channel portion.

In one or more embodiments, upon starting the supply of water in the state that the supply of water using the water supply channel portion may be terminated.

In one or more embodiments, the reducer valve and the pump may operate simultaneously, or the reducer valve may operate earlier than the pump.

In one or more embodiments, upon terminating the supply of water in the state that the supply of water using the water supply channel portion proceeds, the pump first may stop operating and then the reducer valve stops operating.

In another aspect a refrigerator is provided, comprising, a storage compartment divided up and down to comprise a refrigerator compartment and a freezer compartment; a water tank located in the refrigerator compartment; an ice making device located in the freezer compartment; a water supply channel portion providing a path in which water is supplied from the water tank to the ice making device; a pump fluidly communicating with the water supply channel portion and pumping the water; a reducer valve fluidly communicating with the water supply channel portion and opened and closed to selectively introduce air into the water supply channel portion; and a controller controlling the reducer valve to be open and closed.

In one or more embodiments, the reducer valve may comprise a valve body portion fluidly communicating with the water supply channel portion and providing a path in which the water flows; an air hole placed on one side of the valve body portion and providing a path in which air is introduced; and a plunger placed to face the air hole and reciprocating to selectively open and close the air hole.

In one or more embodiments, the reducer valve may further comprises a coil to generate a magnetic field upon receiving power.

In one or more embodiments, the plunger may move in a direction, in which the air hole is placed, to close the air hole as the magnetic field is generated in the coil upon the reducer valve being turned on by the controller.

In one or more embodiments, the plunger may move in an opposite direction to the direction, in which the air hole is placed, to open the air hole as the magnetic field is removed in the coil upon the reducer valve being turned off by the controller.

In one or more embodiments, a plunger cap may be placed on one side of the plunger.

In one or more embodiments, the plunger cap may come into contact with a lowest end portion of the air hole to close the air hole upon the reducer valve being turned on.

In one or more embodiments, the plunger cap may be spaced apart from the lowest end portion of the air hole to open the air hole upon the reducer valve being turned off.

In one or more embodiments, the lowest end portion of the air hole may be positioned above a highest water level of the water tank.

In one or more embodiments, the lowest end portion of the air hole may be positioned within a water supply path in which the water passes through the valve body portion.

### [Advantageous Effects]

In the refrigerator of the disclosure, the controller electronically controls the air hole of the reducer valve to be open and closed, and thus a point in time to open and close the air hole for discharging air to the water supply channel portion is accurately controlled.

Further, in the refrigerator of the disclosure, the controller electronically controls the air hole of the reducer valve to be open and closed, so that the air hole can be properly closed without being affected by the amount of water passing through the water supply channel portion, thereby significantly reducing water leaking through the air hole.

Further, in the refrigerator of the disclosure, when the supply of water is terminated while the supply of water proceeds through the water supply channel portion, the controller electronically controls the operation of the pump and controls the air hole of the reducer valve to be open and closed so that the pump can first stop operating and then the reducer valve can stop operating, thereby clearly distinguishing between a point in time to stop the operation of the pump and a point in time to open the air hole with a time difference.

In this way, a point in time to stop the operation of the pump and a point in time to open the air hole are controlled to have a time difference therebetween, thereby significantly decreasing water leaking through the air hole at a point in time when the air hole is switched over between opening and closing.

Further, in the refrigerator of the disclosure, the end portion of the water supplying pipe facing toward the ice making device is located below the lowest water level of the water tank, or located between the lowest water level and the highest water level of the water tank, thereby preventing a siphon phenomenon that may occur when water flows from the water tank to the ice making device.

Further, in the refrigerator of the disclosure, the controller electronically controls the air hole of the reducer valve to be open and closed, thereby properly controlling the air hole to be open so that air can be introduced into the water supply channel portion at a desired point in time.

Accordingly, the siphon phenomenon is prevented by opening the air hole when a preset amount of water has flowed through the water supply channel portion, thereby preventing the amount of water from additionally flowing more than the preset amount due to the siphon phenomenon.

Further, in the refrigerator of the disclosure, the section of the water supply channel portion, in which air and water are mixed, is removed by introducing air into the water supply channel portion after the pump stops operating, thereby decreasing a load on the operation of the pump when the pump is resumed.

Further, in the refrigerator of the disclosure, the section of the water supply channel portion, in which air and water are mixed, is removed by introducing air into the water supply channel portion after the pump stops operating, thereby solving a sanitary problem that may occur when water unnecessarily remains in the water supplying pipe until the pump is resumed.

In addition to the above-mentioned effects, specific effects of the disclosure will be described together while describing subject matters to implement the disclosure.

### [Description of Drawings]

FIG. 1 is a front perspective view of a refrigerator with doors closed.
FIG. 2 is a block diagram of a controller.
FIG. 3 is a lateral cross-section view of a water tank, a pump, a reducer valve, and an ice making device according to an embodiment of the specification.
FIG. 4 is a lateral cross-section view of a water tank, a pump, a reducer valve, and an ice making device according to another embodiment of the specification.
FIG. 5 shows a water supply channel portion formed by connecting a pump and a reducer valve according to an embodiment of the specification.
FIG. 6 shows a water supply channel portion formed by connecting a pump and a reducer valve according to another embodiment of the specification.
FIG. 7 shows an operation sequence of a pump and a reducer valve according to an embodiment of the specification.
FIG. 8 is an exploded perspective view of a reducer valve of an embodiment of the specification.
FIG. 9 is a cross-section view of a reducer valve, of which an air hole is open, of an embodiment of the specification.
FIG. 10 is a cross-section view of a reducer valve, of which an air hole is closed, according to an embodiment of the specification.
FIG. 11 is a partially enlarged cross-section view of a reducer valve, of which an air hole is open, of an embodiment of the specification.
FIG. 12 is a partially enlarged cross-section view of a reducer valve, of which an air hole is closed, of an embodiment of the specification.

### [Detailed Description]

The foregoing objects, features and merits will be described below in detail with reference to the accompanying drawings, and thus a person having ordinary knowledge in the art to which the disclosure pertains can easily implement the technical ideas of the disclosure. In terms of describing the disclosure, detailed descriptions of related known art will be omitted when they make the subject matters of the disclosure rather unclear. Below, exemplary embodiments of the disclosure will be described in detail with reference to the accompanying drawings. In the accompanying drawings, the same reference numerals refer to the same or similar components.

Terms such as "first" and "second" may be used to describe various components, but the components should not be limited by these terms. The terms are merely used for distinguishing one component from another component, and a first component may also be a second component unless particularly described otherwise

Through the specification, each component may be singular or plural unless particularly described otherwise.

Hereinafter, when it is said that an arbitrary component is disposed at "an upper portion (or a lower portion)" of a component or disposed "above (or below)" an component, this may not only mean that the arbitrary component is disposed in contact with an upper surface (or a lower surface) of the component, but also mean that another component may be interposed between the component and the arbitrary component disposed above (or below) the component

Further, when it is described that one component is "connected," "coupled," or "joined" to another component, it should be understood that they may be directly connected or joined to each other, but an additional component may be "interposed" therebetween or they may be "connected," "coupled," or "joined" to each other through an additional component.

A singular expression used herein encompasses a plural expression unless the context clearly indicates otherwise. In the disclosure, it should not be interpreted that terms such as "comprise" or "include" necessarily involve all of various components or steps described in this specification, and it should be interpreted that some component or steps among them may not be involved or additional components or steps may further be involved.

Throughout the specification, "A and/or B" may refer to A, B, or A and B unless particularly described otherwise, and "C to D" refers to C or more and D or less unless particularly described otherwise.

Below, a refrigerator of some embodiments of the disclosure will be described.

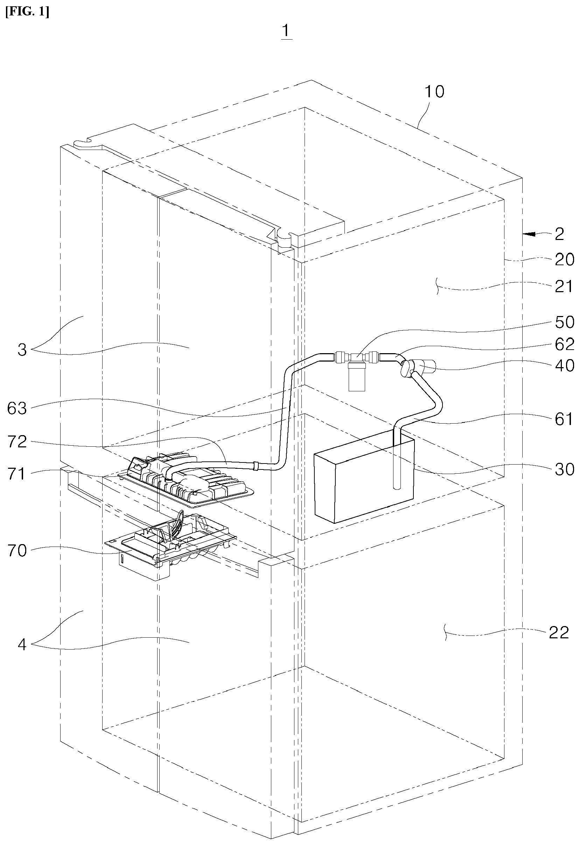

First, the refrigerator, and connection relationships between major components thereof according to an embodiment of the disclosure will be described with reference to FIG. 1.

Referring to FIG. 1, a refrigerator 1 may have an outer appearance formed by a cabinet 2 internally including one or more storage compartments, i.e., storage spaces for products, and a plurality of doors 3 and 4 to open and close the opening front of the cabinet 2.

The cabinet 2 may include an outer casing 10 that forms an outer surface of the refrigerator 1, and an inner casing 20 that forms an inner surface of the refrigerator 1.

The outer casing 10 and the inner casing 20 may be formed to have a space to be spaced apart from each other, and the space may be filled with an insulation material foaming therein.

The inside of the inner casing 20 may be partitioned into one or more storage spaces.

The inner casing 20 may include one or more storage compartments, for example, a first storage compartment 21 and a second storage compartment 22 arranged up and down. However, the compartments might be also arranged side by side.

For instance, the first storage compartment 21 positioned above may be a refrigerator compartment, and the second storage compartment 22 positioned below may be a freezer compartment.

However, the locations of the first storage compartment 21 and the second storage compartment 22 are not limited thereto. According to an alternative embodiment, the location of the first storage compartment 21 and the second storage compartment 22 may be reversed, and the first storage compartment 21 and the second storage compartment 22 may be arranged side by side in left and right directions.

The first storage compartment 21 may be opened and closed by one or more first doors 3, and the second storage compartment 22 may be opened and closed by one or more second doors 4. One or more of the storage compartments 21, 22 might be realized as a drawer.

An ice making device 70 that makes and stores ice may be placed in the second storage compartment 22 ,i.e. in the freezing compartment.

A water tank 30 that stores the water to be supplied to the ice making device 70 may be placed in the first storage compartment 21.

A water supply channel portion 60 that provides a flow path in which water flows from the water tank 30 to the ice making device 70 may be placed in the first storage compartment 21 .

The water supply channel portion 60 may be formed by connecting one or more water supplying pipes to each other.

Further, a pump 40 that is connected and communicates with the water supply channel portion 60 may be placed in the first storage compartment 21.

The pump 40 pumps water out of the water tank 30 via the water supply channel portion 60 to the ice maker device 70. Thus, the pump 40 may serve to make water flow from the water tank 30 to the ice making device 70 based on pumping pressure.

For instance, the pump 40 may employ a gear water pump. The gear water pump may operate on the principle of using gears that rotate at a constant speed to sucking and discharging water.

More specifically, the gear water pump can pump water based on pressure difference between a suction side and a discharge side as a pair of gears engage and rotate.

The operation of the pump 40 is controlled by a controller. Thus, whether to operate the pump 40 may be controlled by a controller 80.

The controller 80 may be realized as a central control device provided in the refrigerator 1 and may be responsible for various operations and functions of the refrigerator 1, and may include a microcontroller.

The controller 80 may be connected to various sensors and actuators of the refrigerator 1 to receive temperature values and may the just control the operation of the refrigerator based on these one or more sensors values, in particular to adjust temperature and perform cooling, control, and the like operations.

The controller 80 may be connected to the ice making device 70 and control the ice making device 70, thereby detecting when the supply of water is required for the ice making device 70.

For example, when the ice making device 70 requires the supply of water, the ice making device 70 may transmit a water supply signal to the controller 80. So, the ice making device 70 may include a sensor for detecting whether further water supply is required.

The controller 80, which has received the water supply signal, may transmit an operation signal to the pump 40 so as to start the operation of the pump 40.

When the pump 40, which has received the operation signal from the controller 80, starts to operate, water in the water tank 30 may flow to the ice making device 70 through the water supply channel portion 60.

Further, a reducer valve 50 that communicates with the water supply channel portion 60 and selectively introduces air to the water supply channel portion 60 may be placed in the first storage compartment 21 .

Based on the locations of the first storage compartment 21 and the second storage compartment 22, the water tank 30 placed in the first storage compartment 21 may be positioned above the ice making device 70 placed in the second storage compartment 22.

In the case where the water tank 30 for supplying water as above is positioned above the ice making device 70 for receiving water, when the pump 40 operates and the water in the water tank 30 begins to flow through the water supply channel portion 60, there may occur a siphon phenomenon in which water does not stop flowing even after the pump 40 stops operating and continues to flow through the water supply channel portion 60.

Accordingly, the reducer valve 50 may empty water out of the water supplying pipe forming the water supply channel portion 60 by introducing air into the water supply channel portion 60 after the pump 40 stops operating, thereby preventing the siphon phenomenon from occurring.

Whether to operate the reducer valve 50 for introducing air may be controlled by the controller 80.

Therefore, the reducer valve 50 may be an electronic valve that is powered and operated by the controller 80.

Because the reducer valve 50 is electronically controlled by the controller 80, whether and when to introduce air through the reducer valve 50 may be accurately controlled by the controller 80.

A first water supplying pipe 61 may be place between the water tank 30 and the pump 40.

The first water supplying pipe 61 has a first end portion which is in contact with water stored in the water tank 30 and a second end portion is connected to the pump 40.

A second water supplying pipe may be placed between the pump 40 and the reducer valve 50. The second water supplying pipe 62 has a first end portion connected to the pump 40 and a second end portion connected to the reducer valve 50.

However, the communication between the pump 40 and the reducer valve 50 is not limited to the foregoing example.

For example, the pump 40 and the reducer valve 50 may be directly connected to each other without a separate water supplying pipe, i.e., the second water supplying pipe 62 connected therebetween, thereby providing a water supply path in which water flows.

A third water supplying pipe 63 may be placed between the reducer valve 50 and the ice making device 70. The third water supplying pipe 63 has a first end portion connected to the reducer valve 50 and a second end portion extended in the direction of the ice making device 70.

The second end portion of the third water supplying pipe 63 facing toward the ice making device 70 may not be directly connected to the ice making device 70 and may not be in contact with water supplied to and stored in the ice making device 70.

Because the ice making device 70 is placed in the freezer compartment 22, when the end portion of the third water supplying pipe 63 is directly connected to the ice making device 70, a problem may arise in that the end portion of the third water supplying pipe 63 freezes.

Accordingly, a bracket assembly 71, as shown in Fig. 1, with a guide tube 72 may be placed between the third water supplying pipe 63 and the ice making device 70.

The bracket assembly 71 may be embedded in an insulation material foamed in an empty space between the first storage compartment 21 and the second storage compartment 22 and disposed to cover the upper portion of the ice making device 70.

The bracket assembly 71 may include the guide tube 72, i.e., the water supplying pipe extending toward the third water supplying pipe 63.

The third water supplying pipe 63 may be connected to the guide tube 72 and allow water to flow from the water tank 30 to the ice making device 70 through the guide tube 72.

The third water supplying pipe 63 may be connected to the guide tube 72 in such a way of being inserted up to a certain area of the guide tube 72 so as to be spaced apart at a predetermined distance from the freezer compartment.

Because the bracket assembly 71 is embedded in the insulation material, water passing through the bracket assembly 71 via the guide tube 72 may not freeze.

In this way, the bracket assembly 71 not only serves to make water flow to the ice making device 70 without freezing through the guide tube 72, but also serves to finish the upper area of the ice making device 70. The bracket assembly 71 may be in or at a partition wall separating the refrigerator compartment from the freezing compartment. It may serve as an upper cover of the ice making device 70.

As described above, the first water supplying pipe 61, the second water supplying pipe 62, and the third water supplying pipe 63 may form the water supply channel portion 60, i.e., the water supply path in which water of the water tank 30 flows.

Further, the guide tube 72 fluidly communicating with the third water supplying pipe 63 may also be involved in the water supply channel portion 60.

Further, because the pump 40 and the reducer valve 50 are fluidly connected to each other or fluidly communicate with the water supply channel portion 60, in a broad sense the pump 40 and the reducer valve 50 may be also part of the water supply channel portion 60 along with the first water supplying pipe 61, the second water supplying pipe 62, and the third water supplying pipe 63.

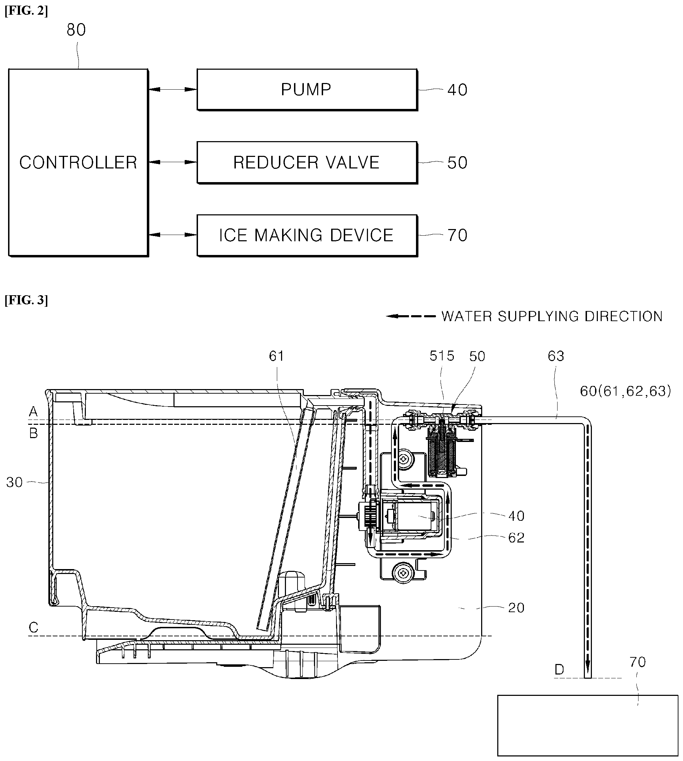

Below, various embodiments of the refrigerator 1, in which water is supplied from the water tank 30 to the ice making device 70, will be described with further reference to FIGS. 3 to 12.

Referring to FIG. 3, the ice making device 70 may be positioned below the lowest water level C of the water tank 30.

Further, the end portion D of the water supplying pipe facing toward the ice making device 70 may be positioned below the lowest water level C of the water tank 30.

In the present specification, the end portion of the water supplying pipe facing toward the ice making device 70 may mean, but not limited to, the end portion D of the third water supplying pipe 63, and may alternatively mean the end portion of the guide tube 72 connected to the third water supplying pipe 63.

As described above, when the ice making device 70 and the end portion of the water supplying pipe facing toward the ice making device 70 are positioned below the lowest water level C of the water tank 30, there may occur a siphon phenomenon in which water of the water tank 30 continues to flow through the water supply channel portion 60 even after the pump 40 stops operating.

Therefore, according to the present specification, the reducer valve 50 includes an air hole 515 through which air is selectively introduced into the water supply channel portion 60, and opens and closes the air hole 515 based on power supplied by the controller 80, thereby preventing the siphon phenomenon from occurring.

Specifically, the lowest end portion A of the air hole 515 of the reducer valve 50 may be positioned on the same line as or above the highest water level B of the water tank 30.

Accordingly, when the air hole 515 of the reducer valve 50 is opened after the pump 40 stops operating, the siphon phenomenon is prevented from occurring as air is introduced into the water supply channel portion 60, and thus water stops flowing through the water supply channel portion 60.

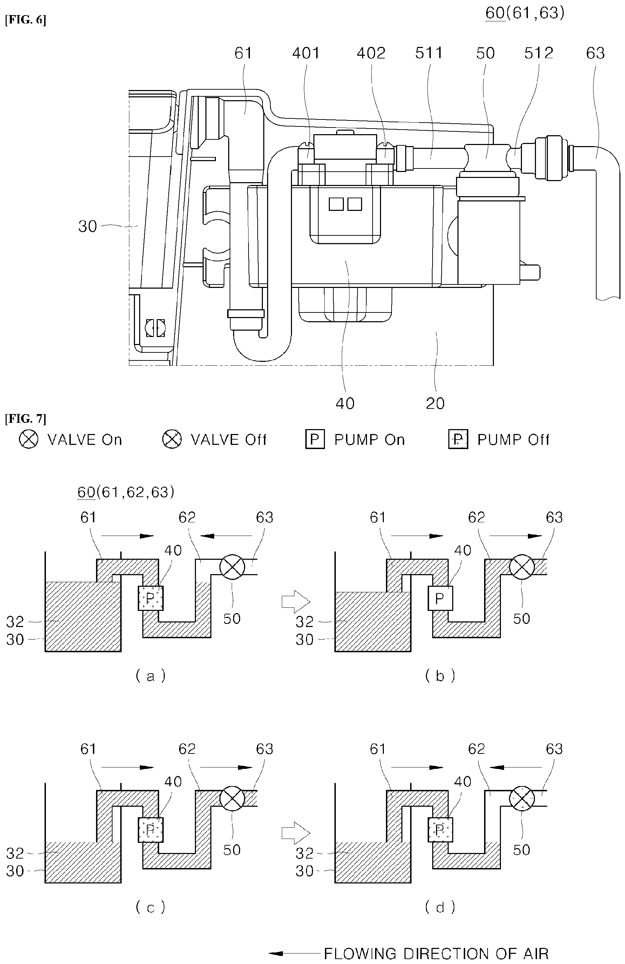

Referring to FIG. 7, the operation sequences of the pump and the reducer valve according to an embodiment of the present specification will be described in more detail.

In FIG. 7, a stage (a) shows that the reducer valve 50 is maintained turned on to close the air hole 515 in the state that water 32 is fully filled in the water tank 30 up to the highest water level of the water tank 30 and the pump 40 stops operating.

In the stage (a), it is assumed that the reducer valve 50 has already operated being turned off with the air hole 515 opened, and then the reducer valve 50 has been operated being on with the air hole 515 closed.

In other words, the stage (a) refers to a stage before the supply of water is resumed in the state that the supply of water through the water supply channel portion 60 has been stopped.

In the state that the air hole 515 is opened before the stage (a), the third water supplying pipe 63 extending toward the ice making device 70 with respect to the reducer valve 50 may be maintained in a state that water is removed by the introduction of air.

Accordingly, the flowing direction of air faces toward the ice making device 70 with respect to the first water supplying pipe 61, and the flowing direction of air faces toward the water tank 30 with respect to the third water supplying pipe 63, so that the height of the water in the second water supplying pipe 62 can be maintained at the same height as the highest water level of the water 32 stored in the water tank 30.

A stage (b) shows that the pump 40 operates to make the water 32 flow from the water tank 30 to the ice making device 70, so that the supply of water can proceed through the water supply channel portion 60.

Because the reducer valve 50 has already been turned on in the stage (a) to close the air hole 515 and block the introduction of the air, the water 32 passing through the reducer valve 50 may flow through the water supply channel portion 60 without leaking through the air hole 515.

Although FIG. 7 shows an embodiment that a point in time to open and close the reducer valve 50 and a point in time to operate the pump 40 are different when the supply of water starts from the state that the supply of water through the water supply channel portion 60 is terminated, the disclosure is not limited to this embodiment.

For example, when the supply of water starts from the state that the supply of water through the water supply channel portion 60 is terminated, the reducer valve 50 may operate to be turned on earlier than the pump 40, but is not limited thereto. Alternatively, the reducer valve 50 and the pump 40 may operate simultaneously.

As described above, the reducer valve 50 and the pump 40 according to the present specification are electronically controlled by the controller 80, thereby accurately controlling a point in time to operate the reducer valve 50 and a point in time to operate the pump 40.

Therefore, when the supply of water is resumed, water is emptied out of a section of the water supplying pipe between the reducer valve 50 and the pump 40, and thus the possibility of leaking the water 32 through the air hole 515 before the air hole 515 of the reducer valve 50 is closed may be very low even though the reducer valve 50 and the pump 40 are controlled to operate simultaneously,

In the stage (b), air may move in a direction toward the ice making device 70.

A stage (c) shows that the pump 40 stops operating when the supply of water through the water supply channel portion 60 is terminated.

In other words, when the supply of water is terminated while water is supplied through the water supply channel portion 60, the pump 40 may stop operating before the operation of the reducer valve 50 is turned off.

However, when the siphon phenomenon occurs even when the pump 40 stops operating, the water 32 in the water tank 30 does not stop flowing and continues to flow in the direction toward the ice making device 70 through the water supply channel portion 60.

Because the operation of the pump 40 has stopped, the amount or speed of water passing through the water supply channel portion 60 due to not the pump 40 but the siphon phenomenon may become smaller or slower than the amount or speed of water passing through the water supply channel portion 60 while the pump 40 is operating.

Therefore, in a stage (d), the reducer valve 50 may be turned off to open the air hole 515 of the reducer valve 50 and introduce air so as to prevent the siphon phenomenon that occurs even when the supply of water through the water supply channel portion 60 is terminated.

When the supply of water is terminated while water is supplied through the water supply channel portion 60, it is preferable that the pump 40 first stops operating and then the reducer valve 50 stops operating as shown in the stage (c).

When the operation of the pump 40 and the operation of the reducer valve 50 stop at the same time or the operation of the reducer valve 50 stops before the operation of the pump 40 in order to terminate the supply of water while water is being supplied, water may leak through the opened air hole 515 of the reducer valve 50.

Therefore, according to an embodiment of the present specification, when the supply of water is terminated in the state that the water is supplied through the water supply channel portion 60, the controller 80 controls a point in time to stop the pump 40 and a point in time to turn off the reducer valve 50 to have a predetermined time difference therebetween, thereby significantly reducing the possibility of water leaking through the air hole 515.

When the reducer valve 50 is turned off to open the air hole 515 as shown in the stage (d), water is emptied out of the third water supplying pipe 63 facing toward the ice making device 70 with respect to the reducer valve 50.

Accordingly, the flowing direction of air faces toward the ice making device 70 with respect to the first water supplying pipe 61, and the flowing direction of air faces toward the water tank 30 with respect to the third water supplying pipe 63, so that the height of the water in the second water supplying pipe 62 can be maintained at the same height as the water level of the water 32 stored in the water tank 30.

In this way, the process of supplying water through the stages (a) to (d) is repeated based on a water supply resuming signal, thereby alternating between a water supply stop and a water supply start.

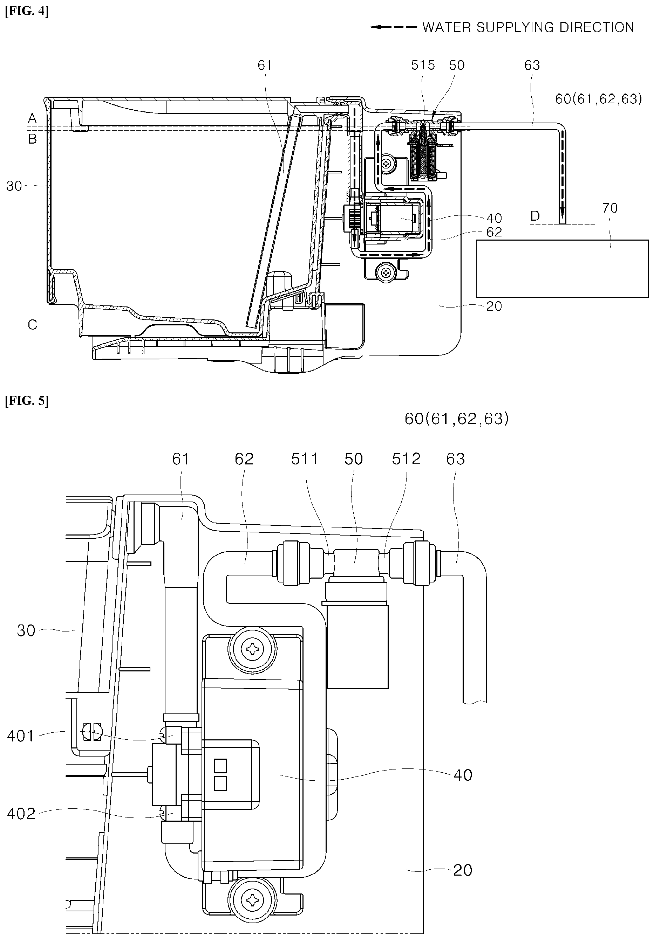

Meanwhile, referring to FIG. 4, at least a portion of the ice making device 70 may be located between the lowest water level C and the highest water level B of the water tank 30.

Further, the end portion of the water supplying pipe facing toward the ice making device 70 may be located between the lowest water level C and the highest water level B of the water tank 30.

In the present specification, the end portion of the water supplying pipe facing toward the ice making device 70 may mean, but not limited to, the end portion of the third water supplying pipe 63, and may alternatively mean the end portion of the guide tube 72 connected to the third water supplying pipe 63.

As described above, when the ice making device 70 and the end portion of the water supplying pipe facing toward the ice making device 70 are positioned below the highest water level B of the water tank 30, there may occur the siphon phenomenon in which water of the water tank 30 continues to flow through the water supply channel portion 60 even after the pump 40 stops operating.

Therefore, according to the present specification, the reducer valve 50 includes the air hole 515 through which air is selectively introduced into the water supply channel portion 60, and opens and closes the air hole 515 based on power supplied by the controller 80, thereby preventing the siphon phenomenon from occurring.

Specifically, the lowest end portion A of the air hole 515 of the reducer valve 50 may be positioned on the same line as or above the highest water level B of the water tank 30.

Accordingly, when the air hole 515 of the reducer valve 50 is opened after the pump 40 stops operating, the siphon phenomenon is prevented from occurring as air is introduced into the water supply channel portion 60, and thus water stops flowing through the water supply channel portion 60.

Various embodiments of an arrangement relationship of the pump 40 and the reducer valve 50 may be described with reference to FIGS. 5 and 6.

The water tank 30, the pump 40, and the reducer valve 50 placed within first storage compartment 21 may be arranged as close to one another within the same space.

In this way, the water tank 30, the pump 40, and the reducer valve 50 are arranged adjacent to one another, so that the length of the water supplying pipe can be decreased as much as possible, thereby reducing a sanitary problem that may occurs when water remains in the pipe and improving space utilization.

For example, as shown in FIG. 5, the second water supplying pipe 62 may be placed between and connected to the pump 40 and the reducer valve 50.

Accordingly, the first sides of the water tank 30 and the pump 40 may be connected by the first water supplying pipe 61, the second side of the pump 40 and the first side of the reducer valve 50 may be connected by the second water supplying pipe 62, and the second side of the reducer valve 50 may be connected by the third water supplying pipe 63.

The first side of the pump 40 connected to the first water supplying pipe 61 may form a pump inlet 401, and the second side of the pump 40 connected to the second water supplying pipe 62 may form a pump outlet 402.

The water supply channel formed by the pump inlet 401 and the pump outlet 402 of the pump 40 may be disposed to be oriented in up and down directions.

In addition, the first side of the reducer valve 50 connected to the second water supplying pipe 62 may form a water supply inlet 511, and the second side of the reducer valve 50 connected to the third water supplying pipe 63 may form a water supply outlet 512.

The water supply channel formed by the water supply inlet 511 and the water supply outlet 512 of the reducer valve 50 may be disposed to be oriented in left and right directions.

In other words, the pump 40 and the reducer valve 50 may be disposed so that a direction, in which the water supply channel formed by the pump inlet 401 and the pump outlet 402 of the pump 40 is oriented, and a direction, in which the water supply channel formed by the water supply inlet 511 and the water supply outlet 512 of the reducer valve 50 is oriented, can intersect each other.

In this case, the pump 40 is arranged to extend longer in the up and down directions than the left and right directions, so that the pump 40 and the reducer valve 50 can be arranged closer to each other in the left and right directions.

Accordingly, the left and right widths formed by the pump 40 and the reducer valve 50 are reduced, thereby improving the space utilization.

In this case, the water supply inlet 511 and the water supply outlet 512 of the reducer valve 50 may be formed to be symmetrical to each other.

According to an alternative embodiment, the pump 40 may be disposed so that the water supply channel formed by the pump inlet 401 and the pump outlet 402 of the pump 40 can be oriented in the left and right directions.

For example, as shown in FIG. 6, the pump 40 and the reducer valve 50 may be arranged so that the direction, in which the water supply channel formed by the pump inlet 401 and the pump outlet 402 of the pump 40 is oriented, and the direction, in which the water supply channels formed by the water supply inlet 511 and the water supply outlet 512 of the reducer valve 50 are oriented, can coincide with each other.

In this case, the direction, in which the water supply channel formed by the pump inlet 401 and the pump outlet 402 of the pump 40 is oriented, and the direction, in which the water supply channels formed by the water supply inlet 511 and the water supply outlet 512 of the reducer valve 50 are oriented, may be arranged on the same line to overlap each other in the left and right directions.

Accordingly, the water tank 30 and the pump inlet 401 of the pump 40 maya be connected by the first water supplying pipe 61, the pump outlet 402 of the pump 40 and the water supply inlet 511 of the reducer valve 50 may be connected directly without any separate water supplying pipe, and the water supply outlet 512 of the reducer valve 50 may be connected by the third water supplying pipe 63.

In this way, the pump 40 and the reducer valve 50 are directly connected without any separate water supplying pipe, thereby significantly reducing the overall length of the water supply channel portion 60.

Accordingly, it is possible to reduce not only a sanitary problem that may occurs when water remains in the water supplying pipe, but also the curvature of the flow path in which water flows, thereby having an advantage of lowering the pressure required for the pump 40 to pump water.

In this case, the water supply inlet 511 and the water supply outlet 512 of the reducer valve 50 may be formed to be asymmetrical to each other.

For example, the water supply inlet 511 of the reducer valve 50, which is directly connected to the pump outlet 402 of the pump 40, may be formed to extend long in the direction facing toward the pump 40 so as to serve as the water supplying pipe.

As the water supply inlet 511 of the reducer valve 50 is formed in this way, the pump 40 and the reducer valve 50 are directly connected by simply changing the shape of the reducer valve 50 without adding any separate water supplying pipe, thereby having an advantage of being easily configured by a single module.

In this case, the reducer valve 50 is required to have the air hole 515 disposed to face upward to introduce air without leakage. Therefore, the direction of the reducer valve 50 is maintained as it is, and the direction of the pump 40 is changed from the up and down directions to the left and right directions, thereby connecting the pump 40 and the reducer valve 50 each other without substantially changing the design of the space.

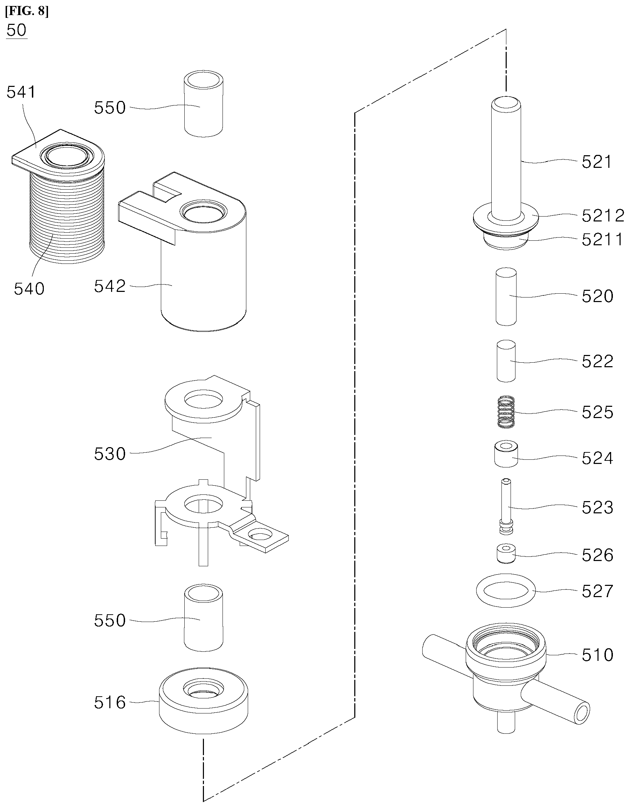

Below, the configuration of the reducer valve 50 will be described in more detail with reference to FIGS. 8 to 12.

The reducer valve 50 may include a valve body portion 510.

The valve body portion 510 may fluidly communicate with the water supply channel portion 60 through which the water 32 of the water tank 30 flows.

The valve body portion 510 may include the water supply inlet 511 and the water supply outlet 512 formed extending in the opposite directions of a cylindrical body portion, respectively.

The water supply inlet 511 and the water supply outlet 512 may be connected to the second water supplying pipe 62 and the third water supplying pipe 63, respectively, to provide a passage through which the water 32 flows.

In an upper portion of the valve body portion 510 may be formed an air inlet 513 extending upward to introduce air thereinto.

The air inlet 513 may be formed in the central area of the valve body portion 510.

The air hole 515 may be formed in a lower portion of the air inlet 513, and fluidly communicate with the water supply inlet 511 and the water supply outlet 512.

The lowest end portion A of the air hole 515 formed at the lower end of the air inlet 513 may be located within the water supply path formed by the water supply inlet 511 and the water supply outlet 512, i.e., the water supply path through which the water 32 passes in the valve body portion 510.

To this end, a protrusion 514 protruding downward may be formed in the lower portion of the air inlet 513, and the lowest end portion (A) of the air hole 515 may be formed in the end portion of the protrusion 514.

The protrusion 514 may be shaped to taper downward, thereby minimizing resistance of the water 32 passing through the water supply inlet 511 and the water supply outlet 512 against the protrusion 514, and introducing air into the valve body portion 510 more quickly through the air hole 515.

The lower portion of the valve body portion 510 may be formed as an opening area so that the plunger guide 521 can be inserted therein.

An upper area of the plunger guide 521 may be partially inserted in and secured to the lower opening area of the valve body portion 510.

The plunger guide 521 may be internally empty, be opened at the first side facing the valve body portion 510 and closed at the second side, and extend long in a certain direction.

In the upper area of the plunger guide 521 may be formed an insertion portion 5211 inserted in the lower opening area of the valve body portion 510, and a holding protruding portion 5212 formed protruding outward along a lower circumference of the insertion portion 5211.

The upper area of the plunger guide 521 formed with the insertion portion 5211 may be formed to have a wider outer diameter than the lower area thereof, and the inner diameter of the hollow plunger guide 521 may be formed to be the same in the upper and lower areas.

Between the plunger guide 521 and the valve body portion 510 may be formed an O-ring 527 to prevent water from leakage.

The O-ring 527 may be formed to surround the insertion portion 5211 of the plunger guide 521, and disposed between the holding protruding portion 5212 of the plunger guide 521 and the valve body portion 510, thereby sealing a space between the plunger guide 521 and the valve body portion 510.

In the empty space inside the plunger guide 521 may be placed the plunger 520, the shaft bar 522, and the rod shaft 523 arranged to be sequentially stacked in the direction from the closed lower portion toward the opened upper portion.

In the lowest portion of the plunger guide 521 is placed the plunger 520 that is movable in the up and down directions and moves toward an upper portion where the valve body portion 510 is located when a magnetic field is applied around the plunger 520.

The shaft bar 522 and the rod shaft 523 may be arranged to be sequentially stacked on the upper portion of the plunger 520.

The shaft bar 522 may serve to supplement the moving distance of the plunger 520 by filling a spaced distance between the plunger 520 and the rod shaft 523.

Therefore, when the plunger 520 moves upward, the shaft bar 522 also moves upward to move the rod shaft 523 upward.

In other words, the vertical movement of the plunger 520 is transferred to the rod shaft 523 through the shaft bar 522, thereby synchronizing the movement of the plunger 520 with the movement of the rod shaft 523.

Therefore, the plunger 520 is disposed to face the air hole 515 so that the rod shaft 523 can reciprocate to selectively open and close the air hole 515.

Around the rod shaft 523 may be arranged a spring 525 and a shaft guide 524.

Specifically, the spring 525 may be disposed to surround the lower area of the rod shaft 523, and the shaft guide 524 may be disposed to surround the upper area of the rod shaft 523.

In this case, a stepped portion 5231 may be formed in an upper area of the rod shaft 523 and has an outer diameter larger than an inner diameter of the shaft guide 524.

The spring 525 may be placed between the shaft bar 522 and the shaft guide 524, and the shaft guide 524 may be placed between the spring 525 and the stepped portion 5231.

The shaft guide 524 may be secured as forcibly fitted to an undercut structure 5213 formed on the inner side of the plunger guide 521.

For example, the undercut structure 5213 may be formed on the inner side of the plunger guide 521 and have a wider inner diameter compared to other internal areas of the plunger guide 521 so that the shaft guide 524 can be secured thereto.

Therefore, when the shaft guide 524 is forcibly fitted into the undercut structure 5213 formed in the up and down directions, the shaft guide 524 may be secured inside the plunger guide 521 so as not to move in the up and down directions.

The stepped portion 5231 of the rod shaft 523 is caught in the upper area of the shaft guide 524 and restricted not to move in the downward direction. Therefore, there may be defined a limit distance within which the rod shaft 523 is allowed to move in the downward direction when the plunger 520 moves in the downward direction.

In this way, the shaft guide 524 is secured to the inner side of the plunger guide 521 so as not to move up and down, thereby not only supporting the spring 525 and the rod shaft 523, but also allowing the spring 525 and the rod shaft 523 to exert a force in an opposite direction to the operating direction of the plunger 520.

In an upper end portion of the rod shaft 523 may be formed a plunger cap 526 that substantially comes into contact with the air hole 515 and serves to seal the air hole 515 when the rod shaft 523 moves in the upper direction.

In other words, when the rod shaft 523 moves in the upper direction, the plunger cap 526 comes into contact with the air hole 515 formed in the protrusion 514 and seals the air hole 515, thereby blocking the introduction of air into the reducer valve 50.

In this case, as described above, the spring 525 and the rod shaft 523 exert the force in the opposite direction to the operating direction of the plunger 520, so that the plunger cap 526 being in contact with the air hole 515 can improve the sealing of the air hole 515 based on the reaction of the spring 525 when the plunger 520 moves upward.

The plunger cap 526 may be made of an elastic rubber material, thereby reducing damage due to friction around the air hole 515 and further improving the sealing of the air hole 515.

A guide cap 516 may be formed in a lower portion of the plunger guide 521, and coupled to the valve body portion 510 while supporting the lower end of the holding protruding portion 5212 of the plunger guide 521.

The insertion portion 5211 and the holding protruding portion 5212 of the plunger guide 521 are disposed between the guide cap 516 and the valve body portion 510, and the guide cap 516 serves to secure the upper area of the plunger guide 521to the valve body portion 510.

The outer peripheral surface of the lower area of the plunger guide 521, which is not inserted into the valve body portion 510, may be surrounded with a pair of sleeves 550.

The pair of sleeves 550 may be arranged to be spaced apart at a predetermined distance, and serve to hold an in-bobbin 541 and an out-bobbin 542 with a coil 540 therebetween and generate a magnetic field.

The in-bobbin 541 may be formed to surround the sleeve 550 along the outer circumferential surface of the sleeve 550, the coil 540 may be formed to surround the in-bobbin 541 along the outer circumferential surface of the in-bobbin 541, and the out-bobbin 542 may be formed to surround the coil 540 along the outer circumferential surface of the coil 540.

A bracket 530 may be formed on the outer side of the out-bobbin 542 to hold the out-bobbin 542, so that the reducer valve 50 can be secured at a specific position, such as the inner casing 20 of the refrigerator 1.

When power is applied to the reducer valve 50 described above, the magnetic field may be generated by the coil 540.

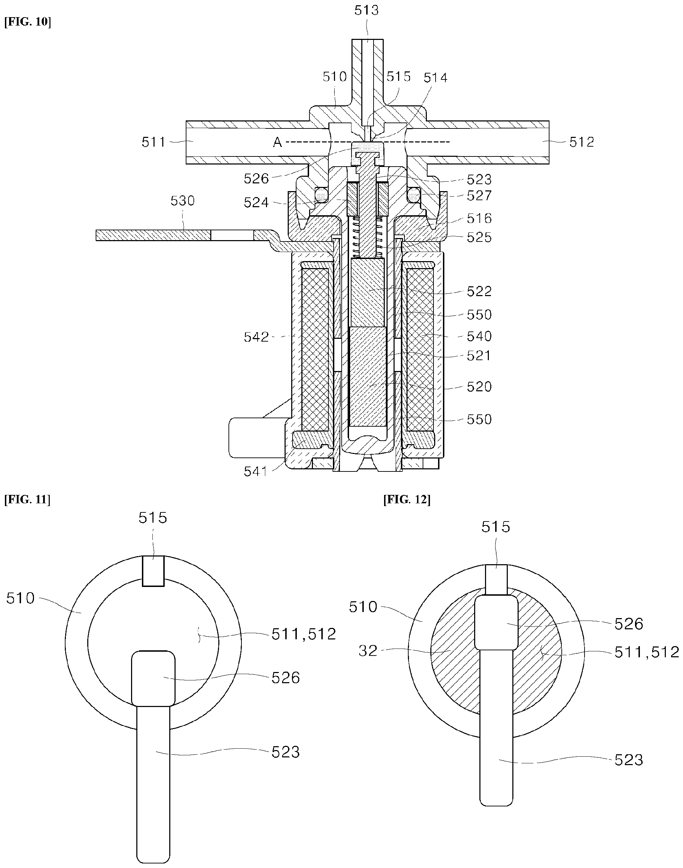

As shown in FIGS. 10 and 12, when the controller 80 turns on the reducer valve 50, the magnetic field is generated in the coil 540 and the plunger 520 moves in the direction, in which the air hole 515 is placed, thereby closing the air hole 515.

Accordingly, the plunger cap 526 disposed on the first side of the plunger 520, more specifically, on the first side of the rod shaft 523 may come into contact with the lowest end portion A of the air hole 515, thereby closing the air hole 515.

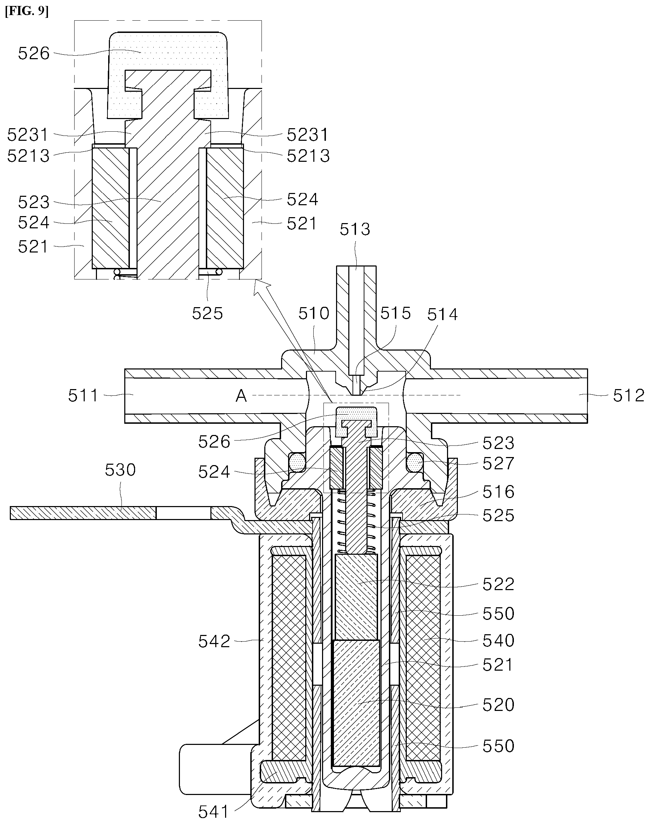

As shown in FIGS. 9 and 11, when the controller 80 turns off the reducer valve 50, the magnetic field is removed in the coil 540 and the plunger 520 moves in the opposite direction to the direction, in which the air hole 515 is placed, thereby opening the air hole 515.

Accordingly, the plunger cap 526 disposed on the first side of the plunger 520, more specifically, on the first side of the rod shaft 523 may come into contact with the lowest end portion A of the air hole 515, thereby opening the air hole 515.

Although embodiments of the disclosure have been described with reference to the accompanying drawings, the disclosure is not limited to the embodiments and drawings disclosed in the present specification, and various changes can be made by those skilled in the art without departing from the scope of the disclosure. Further, even though the operational effects of configurations are not explicitly described in the embodiments of the disclosure, the predictable effects of those configurations should also be recognized.

## Claims

1. A refrigerator (1) comprising:
an ice making device (70);
a water tank (30) configured to store water to be supplied to the ice making device (70);
a water supply channel portion (60) configured to supply water from the water tank (30) to the ice making device (70);
a pump (40) in fluid communication with the water supply channel portion (60) and configured to pump the water; and
a reducer valve (50) in fluid communication with the water supply channel portion (60) to selectively introduce air into the water supply channel portion (60).

2. The refrigerator of claim 1, wherein the reducer valve (50) comprises an air hole (515) positioned above a highest water level of the water tank (30) to selectively introduce air into the water supply channel portion (60).

3. The refrigerator of claim 1 or 2, further comprising a controller (80) to control the reducer valve (50), preferably the air hole (515) on the reducer valve (50), to be opened and closed to selectively introduce air into the water supply channel portion (60).

4. The refrigerator of any one of the preceding claims, wherein the ice making device (70) is positioned below a lowest water level of the water tank.

5. The refrigerator of any one of the preceding claims, wherein the water supply channel portion (60) is formed by one or more water supplying pipes (61, 62, 63), and an end portion of the water supplying pipe facing toward the ice making device (70) is positioned below a lowest water level of the water tank (30).

6. The refrigerator of any one of the preceding claims, wherein at least a portion of the ice making device (70) is located between a lowest water level and the highest water level of the water tank (30).

7. The refrigerator of any one of the preceding claims, wherein the water supply channel portion (60) is formed by one or more water supplying pipes (61, 62, 63), and
an end portion of the water supplying pipe (63) facing toward the ice making device (70) is positioned between a lowest water level and the highest water level of the water tank (30).

8. The refrigerator of any one of the preceding claims, wherein the water supply channel portion (60) is formed by one or more water supplying pipes (61, 62, 63), and
an end portion of the water supplying pipe (61) facing toward the water tank (30) is in contact with water stored in the water tank (30), and
an end portion of the water supplying pipe (63) facing toward the ice making device (70) is not in contact with water supplied to the ice making device (70).

9. The refrigerator of any one of the preceding claims, wherein the refrigerator (1) is partitioned into a refrigerator compartment (21) and a freezer compartment (22) located below the refrigerator compartment (21),
the water tank (30), the pump (40), and the reducer valve (50) are located in the refrigerator compartment (21), and the ice making device (70) is located in the freezer compartment (22).

10. The refrigerator of any one of the preceding claims, wherein the reducer valve (50) is configured to block the introduction of air as the air hole (515) is closed when suppling of water using the water supply channel portion (60) proceed, and to introduce air as the air hole (515) is open upon terminating the supply of water using the water supply channel portion (60).

11. The refrigerator of claim 10, wherein upon starting the supply of water in the state that the supply of water using the water supply channel portion (60) is terminated, the reducer valve (50) and the pump (40) operate simultaneously, or the reducer valve (50) operates earlier than the pump; and/or
upon terminating the supply of water in the state that the supply of water using the water supply channel portion (60) proceeds, the pump (40) first stops operating and then the reducer valve (50) stops operating.

12. The refrigerator of any one of the preceding claims, wherein the reducer valve (50) comprises:
a valve body portion (510) fluidly communicating with the water supply channel portion (60) and providing a path in which the water flows;
an air hole (515) placed on one side of the valve body portion (510) and providing a path in which air is introduced; and
a plunger (520) placed to face the air hole (515) and reciprocating to selectively open and close the air hole (515).

13. The refrigerator of any one of the preceding claims, wherein the reducer valve (50) further comprises a coil (540) to generate a magnetic field upon receiving power,
wherien the plunger (520) is configured to move in a direction of the air hole (515) to close the air hole (515) as the magnetic field is generated in the coil (540) upon the reducer valve (50) being turned on by the controller (80), and
the plunger (520) is configured to move in an opposite direction to open the air hole (515) as the magnetic field is removed in the coil (540) upon the reducer valve (50) being turned off by the controller (80).

14. The refrigerator of claim 12 or 13, wherein a plunger cap (526) is placed on one side of the plunger (520), wherien the plunger cap (526) is configured to come into contact with a lowest end portion of the air hole (515) to close the air hole (515) when the reducer valve (50) is turned on, and
the plunger cap (526) is spaced apart from the lowest end portion of the air hole (515) to open the air hole (515) when the reducer valve (50) is turned off.

15. The refrigerator of claim 12, 13 or 14, wherein the lowest end portion of the air hole (515) is positioned above a highest water level of the water tank (30) and/or the lowest end portion of the air hole (515) is positioned within a water supply path (60) in which the water passes through the valve body portion (510).
